# EUROPEAN PATENT SPECIFICATION

(11) **EP 2 103 842 B1**
(45) Date of publication and mention of the grant of the patent: **07.09.2011**
(21) Application number: 07850771.2
(22) Date of filing: 18.12.2007
(51) Int. Cl.: F16H 1/16, F16D 3/68, F16H 55/22, H02K 7/116

(54) **MOTOR WITH REDUCTION GEAR**
MOTOR MIT UNTERSETZUNGSGETRIEBE
MOTEUR AVEC ENGRENAGE DE REDUCTION

(30) Priority: 22.12.2006 JP 2006345653
(43) Date of publication of application: 23.09.2009
(73) Proprietor: Mabuchi Motor Co., Ltd., Matsudo-shi, Chiba 270-2280 (JP)
(72) Inventor: SAYA, Tsutomu c/o MABUCHI MOTOR CO., LTD., Matsudo-shi Chiba 270-2280 (JP)
(74) Representative: 2K Patentanwälte Blasberg Kewitz & Reichel
(86) International application number: PCT/JP2007/074283
(87) International publication number: WO 2008/078599

(56) References cited:
- DE-A1- 10 115 460
- DE-A1-102004 006 602
- JP-A- 2003 013 989
- JP-A- 2004 245 273
- JP-U- 06 070 465
- JP-U- 56 095 616
- US-B1- 6 342 011

## Description

### TECHNICAL FIELD

The present invention relates to a motor with a reduction gear in which a worm wheel of a reducer section is fixed via a buffer member to an output plate to which an output shaft is fixed.

### BACKGROUND ART

A motor with a reduction gear is an assembly of a motor section and a reducer section. The reducer section is configured such that a worm connected to a rotating shaft, a worm wheel meshed with the worm, and other components are accommodated in a gear box. When the motor of the motor section is driven, the rotating shaft rotates. The rotation of the rotating shaft rotates the worm wheel via the worm at a reduced speed. The rotation of the worm wheel rotates an output plate via a buffer member and then rotates an output shaft fixed to the output plate. The buffer member is accommodated in the worm wheel. When the buffer member is placed in the worm wheel, in order to prevent backlash of the output shaft in the rotational direction, the buffer member is elastically deformed in advance to thereby be brought into a state where elastic force is accumulated therein.

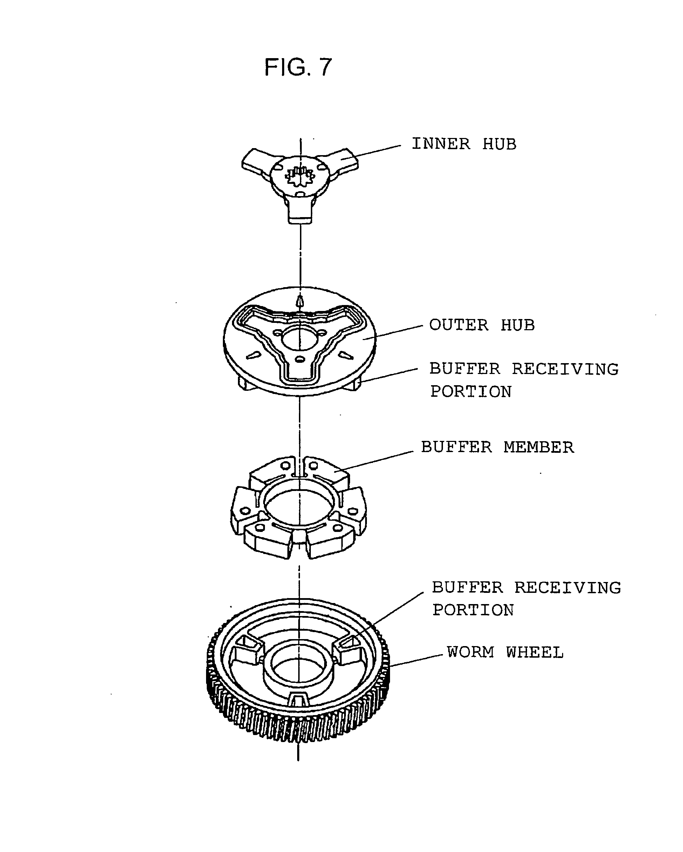

FIG. 7 shows mounting of an outer hub and an inner hub to a worm wheel via a buffer member according to a conventional technique JP 2003 013989 A. The buffer member is disposed in and engaged with the worm wheel, and an output plate composed of the inner hub and the outer hub is engaged with the buffer member. Three worm-wheel-side buffer receiving portions are projectingly formed on the inner circumferential surface of the worm wheel. Each of the worm-wheel-side buffer receiving portions assumes a trapezoidal shape as viewed from the tooth portion side. Also, output-plate-side buffer receiving portions, each having a substantially trapezoidal section, are provided on the outer hub.

Through provision of the trapezoidal buffer receiving portions which have increased widths on the outer circumference side, even when the buffer member is assembled in a deformed state, a reaction force generated as a result of the deformation of the buffer member causes the worm wheel and the outer plate to move for alignment therebetween. However, although these buffer receiving portions are tapered in the radial direction to have a trapezoidal shape, they are not tapered in the axial direction; i.e., they are straight in the axial direction. Therefore, when the buffer member is assembled, the buffer member must be elastically deformed to eliminate clearances. When the worm wheel, the buffer member, and the output plate (the outer and inner hubs) are assembled, the assembly is performed while slits of the buffer member are expanded (press-fit) from the beginning. Therefore, the assembly is difficult. If clearances are provided so as to facilitate the assembly, the clearances inevitably become backlashes in the circumferential direction, and reverse noise is generated when the rotational direction is switched between the normal direction and the reverse direction.

### DISCLOSURE OF THE INVENTION

### PROBLEMS TO BE SOLVED BY THE INVENTION

An object of the present invention is to solve the above-mentioned problems, and to facilitate assembly of a buffer member without providing clearances between the buffer member and an output plate and a worm wheel. Thus, the present invention eliminates backlashes in the circumferential direction, to thereby eliminate reverse noise which would otherwise be generated when the rotational direction is switched between the normal direction and the reverse direction.

### MEANS FOR SOLVING THE PROBLEMS

The present invention provides a motor equipped with a reducer comprising a motor section and a reducer section assembled to the motor section. A projecting end of a rotating shaft extending from the motor section is rotatably supported by a bearing provided within a reducer section. The reducer section has a gear box, a worm mounted on the extending rotating shaft accommodated in the gear box, a worm wheel meshed with the worm, an output plate fixed to the worm wheel via a buffer member, and an output shaft which is fixed to a central portion of the output plate and rotates together with the worm wheel. The worm wheel includes an outer ring having, on its outer circumference side, a tooth portion for engagement with the worm; an inner ring which surrounds the output shaft; a connecting bottom portion connecting the outer ring and the inner ring together; and a plurality of ribs provided at constant intervals. Each of the ribs is tapered in an axial direction from the connecting bottom portion side toward the buffer member side such that the rib decreases in width toward its distal end. The buffer member is composed of a plurality of arcuate blocks connected together to form an annular shape as a whole. The output plate has, in its center, an output shaft coupling portion to which the output shaft is fixed after being aligned therewith. The output plate has a plurality of buffer member compression portions integrally formed at constant intervals on a back face of a disk-like portion of the output plate on which the buffer member is located. Each of the buffer member compression portions is tapered in an axial direction from the disk-like portion side toward the buffer member side such that the compression portion decreases in width toward its distal end. Each of the taper angle of the ribs of the worm wheel and that of the buffer member compression portions of the output plate falls preferably within a range of 4° to 15°.

In the motor equipped with a reducer of a preferred embodiment of the present invention, each of the ribs of the worm wheel is divided at a division point near a radially central position so that each rib is composed of an inner rib and an outer rib. Each of the inner rib connected to the outer circumference side of the inner ring and the outer rib connected to the inner circumference side of the outer ring is tapered toward the division point such that the width of the rib becomes narrowest at its end located toward the division point. The plurality of blocks of the buffer member are connected together via connection portions located near a radially central position. Each of the buffer member compression portions of the output plate is divided at a division point near a radially central position so that each buffer member compression portion is composed of an inner compression section and an outer compression section. Each of the inner compression section and the outer compression section is tapered toward the division point such that the width of the compression section becomes narrowest at its end located toward the division point. Projecting ridge portions are formed on opposite surfaces of the arcuate blocks which surfaces face the worm wheel and the output plate, respectively.

### EFFECT OF THE INVENTION

According to the present invention, the ribs provided on the worm wheel and the compression portions provided on the output plate are tapered in the axial direction. Therefore, the assembly of the worm wheel, the buffer member, and the output plate is facilitated. Further, since the ribs and the compression portions are tapered in the radial direction as well, each of the blocks of the buffer member assumes a shape such that the block swells outward at a position near a radially central position thereof. Therefore, the buffer member can be assembled without generation of backlashes in the circumferential direction.

### BRIEF DESCRIPTION OF THE DRAWINGS

FIG. 1 is a longitudinal sectional view of a motor with a reduction gear configured in accordance with the present invention.
FIG. 2(A) is a sectional view showing an output shaft of a reducer section and its vicinity, and FIG. 2(B) is a view showing the output shaft.
FIG. 3 is a view showing a worm wheel composed of a helical gear.
FIG. 4 is a view showing a buffer member formed of, for example, buffer rubber.
FIG. 5 is a pair of views showing an output plate wherein (A) shows the front face side opposite the side where the buffer member is located, and (B) shows the back face side where the buffer member is located.
FIG. 6 is a pair of views used for explaining the assembly of the worm wheel, the buffer member, and the output plate, wherein (A) is a partial sectional view showing a single buffer member block and its vicinity , and (B) is an entire sectional view taken along line X-X' of (A).
FIG. 7 is a view showing mounting of an outer hub and an inner hub to a worm wheel via a buffer member according to a conventional technique.

### BEST MODE FOR CARRYING OUT THE INVENTION

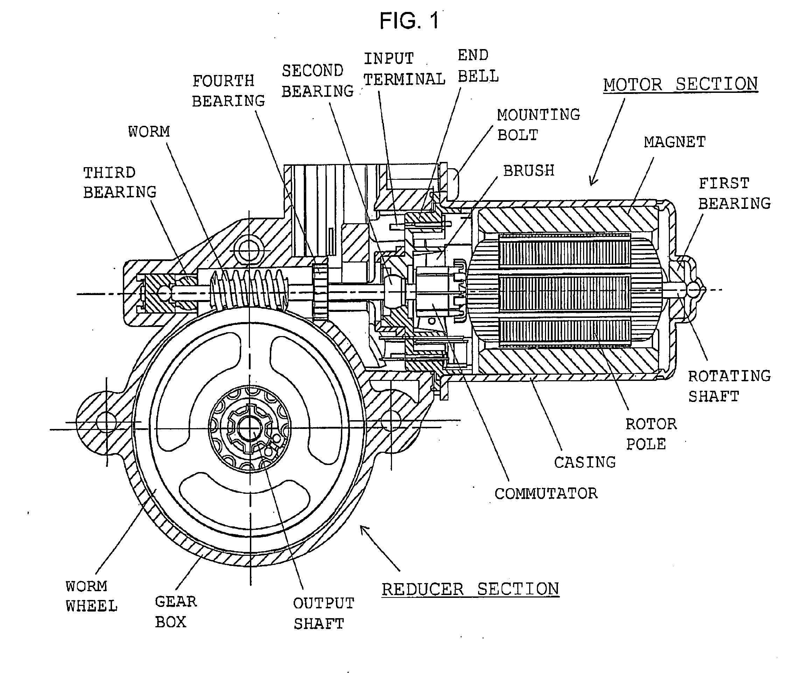

The present invention will next be described with reference to illustrations. FIG. 1 is a longitudinal sectional view of a motor with a reduction gear configured in accordance with the present invention. The motor with a reduction gear is an assembly of a motor section and a reducer section. The motor section is configured such that magnets are attached to the inner circumferential surface of a casing, which is formed of a metal material and assumes the form of a closed-bottomed tube. An end bell made of resin is fitted to an opening portion of the casing, thereby closing the opening portion. A commutator, and rotor poles composed of a laminated core and windings wound around the laminated core are mounted on a rotating shaft, thereby forming a motor rotor. A pair of input terminals are connected to a pair of brushes in contact with the commutator and project outward through the end bell from the motor section for electrical connection. One end of the rotating shaft is supported by a first bearing provided at the center of a bottom portion of the closed-bottomed tubular motor casing. The other end of the rotating shaft is supported by a second bearing housed in a central portion of the end bell. The rotating shaft extends further outward from the motor section into the reducer section.

The reducer section is attached to the motor section by means of mounting bolts. The reducer section is configured such that a gear box made of resin houses a worm fixed on the rotating shaft, a worm wheel composed of a helical gear and meshed with the worm, and other components. A projecting end of the rotating shaft is supported by a third bearing housed in the gear box. Further, a fourth bearing for supporting the rotating shaft is provided in the gear box. However, when the motor is of low-output type, the fourth bearing may be omitted. When the motor of the motor section is driven, the rotating shaft rotates. The rotation of the rotating shaft rotates the worm wheel via the worm at a reduced speed. The rotation of the worm wheel rotates an output shaft via a buffer member or the like. The rotation of the output shaft can, for example, open and close window glass of an automobile via an unillustrated drive means. The structures of the above-described motor section and reducer section may be the same as the conventional technique.

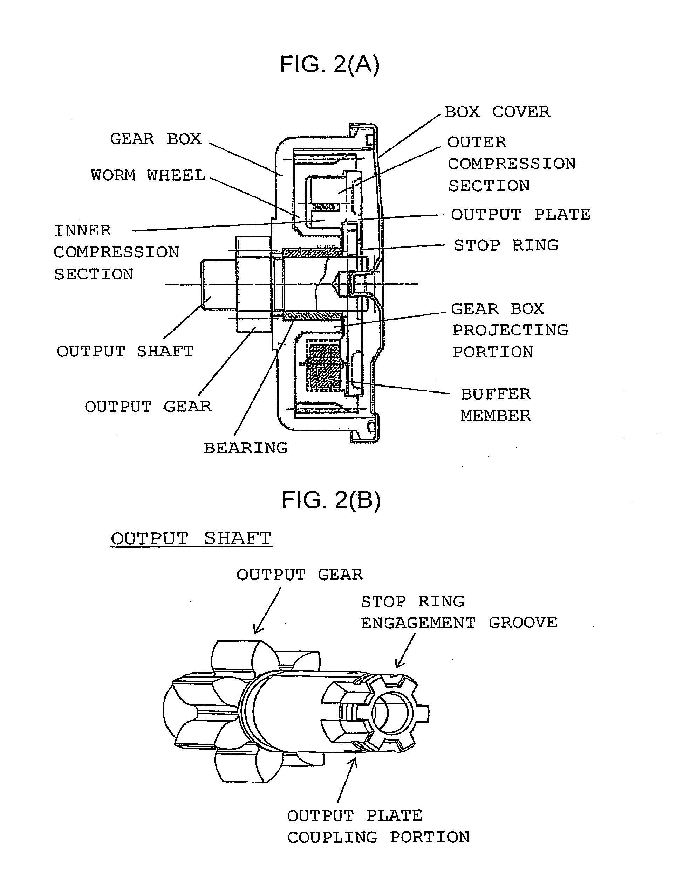

FIG. 2(A) is a sectional view showing the output shaft of the reducer section and its vicinity, and FIG. 2(B) is a view showing the output shaft. The worm wheel, the buffer member, and an output plate are disposed within the gear box. These members are fixed together in a manner to be described in detail later. The gear box formed of resin has a gear box projecting portion integrally formed at the center thereof. A bearing provided on the inner circumference of the gear box projecting portion rotatably supports the output shaft. The output plate is fixed to an output plate coupling portion formed at a distal end portion of the output shaft. An output gear which is to be connected to an external drive mechanism is mounted to a proximal end portion of the output shaft projecting from the gear box. Thus, rotation of the worm wheel rotates the output plate connected to the worm wheel via the buffer member, and then rotates the output shaft fixed to the output plate.

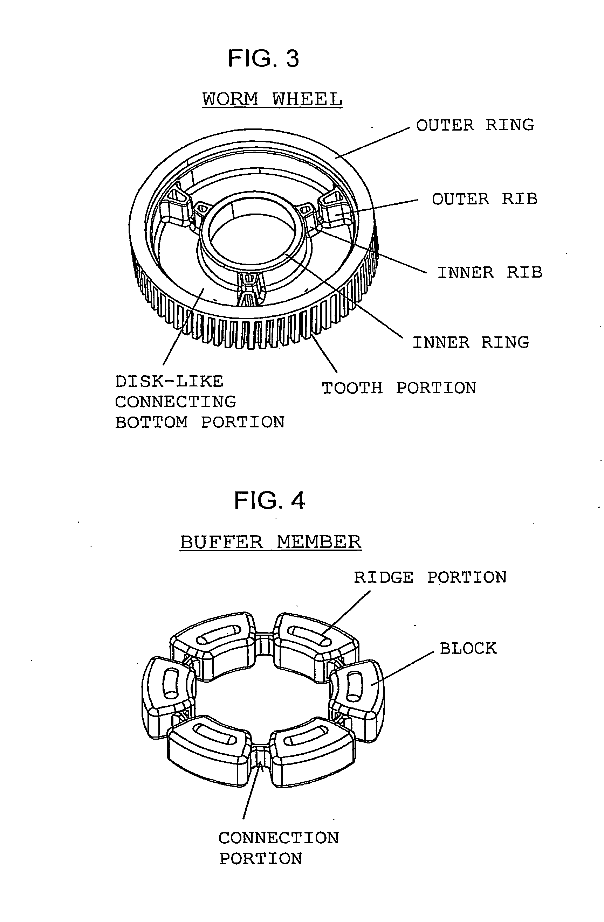

FIG. 3 is a view showing the worm wheel composed of a helical gear. The worm wheel integrally molded from resin includes an outer ring; an inner ring; a disk-like connecting bottom portion connecting the outer and inner rings; and a plurality of (three in the illustrated example) ribs provided at constant intervals. The buffer member is inserted into spaces between the ribs. Since the worm wheel to be combined with the metal worm is formed of resin, the weight and noise can be reduced. Each of the three ribs is divided at a division point near the radially central position; i.e., each rib is composed of an inner rib and an outer rib. Each of connection portions (see FIG. 4) of the buffer member is accommodated in a space between an outer rib and a corresponding inner rib. A tooth portion is provided along the outer circumference of the outer ring. The tooth portion is engaged with the worm fixed to the motor shaft. The inner circumference of the inner ring is engaged with the gear box projecting portion as shown in FIG. 2(A).

The inner ribs are integrally connected to the outer circumference of the inner ring, and the out ribs are integrally connected to the inner circumference of the outer ring. Each of the inner ribs and the outer ribs is tapered toward the division point near the center. Therefore, the width of each rib becomes narrowest at its end located toward the division point. Further, these ribs are tapered in the axial direction from the disk-like connecting bottom portion side such that their widths decrease toward their distal ends (rightward in FIG. 2(A). Desirably, the taper angle (inclination angle) of the ribs falls within a range of 4° to 15°.

FIG. 4 is a view showing the buffer member formed of, for example, buffer rubber. The buffer member is divided into a plurality of (six in the illustrated example) arcuate blocks having the same shape. These blocks are connected together via connection portions located near the center in the radial direction, so that the buffer member assumes an annular shape as a whole. Since the blocks are integrally connected, their assembly can be facilitated. Further, projecting ridge portions are formed on upper and lower surfaces of each of the blocks so as to stabilize contact positions at the time of compression and render the moments generated in the blocks uniform to a possible extent. The three ribs of the worm wheel and the three buffer member compression portions of the output plate are alternately disposed in the spaces between the blocks.

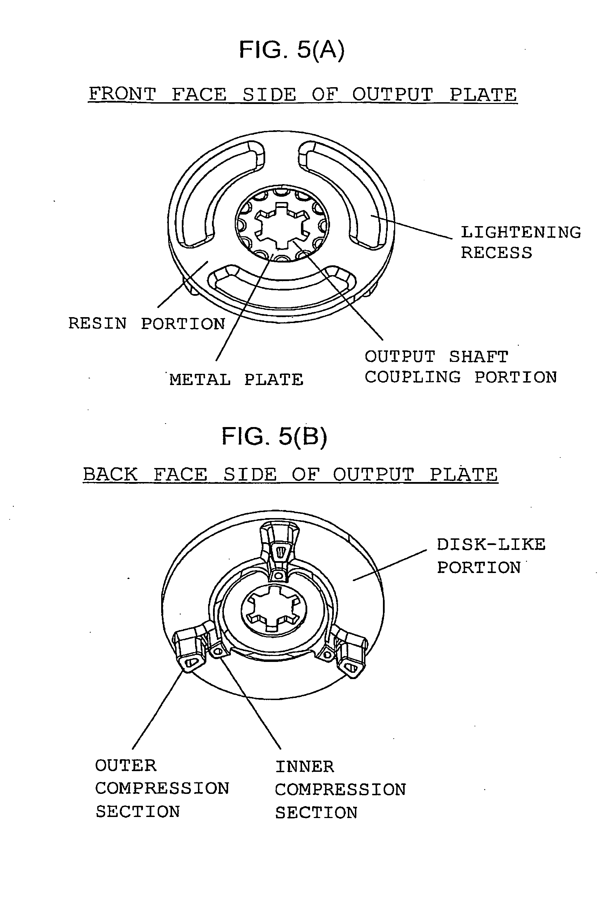

FIG. 5 is a pair of views showing the output plate wherein (A) shows the front face side opposite the side where the buffer member is located, and (B) shows the back face side where the buffer member is located. The illustrated output plate, which has a circular shape as a whole, is formed through insert molding performed in such a manner that a resin portion fixes a metal plate at the center. The metal plate has, at the center thereof, an output shaft coupling portion to which the output shaft is fixed after being positioned. Three lightening recesses are provided on the surface of the resin section so as to reduce the weight of the output plate.

The plurality of (three in the illustrated example) buffer member compression portions provided at constant intervals on the back face side are integrally formed on a disk-like portion during the insert molding. Each of the buffer member compression portions is divided at a division point near the radially central position; i.e., each compression portion is composed of an inner compression section and an outer compression section. The connection portions of the buffer member are located between the outer compression sections and the inner compression sections. Each of the inner compression sections and the outer compression sections is tapered toward the division point near the center. Therefore, the width of each compression section becomes narrowest at the end located toward the division point. Further, these compression sections are tapered in the axial direction from the disk-like portion side such that their widths decrease toward their distal ends (toward the buffer member side). Desirably, the taper angle (inclination angle) of the compression sections falls within a range of 4° to 15°.

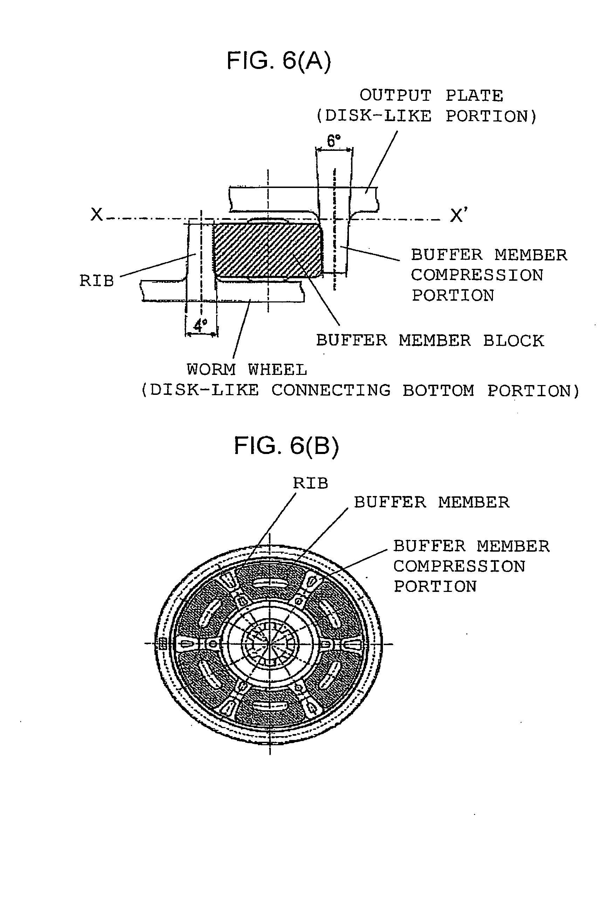

FIG. 6 is a pair of views used for explaining the assembly of the worm wheel, the buffer member, and the output plate, wherein (A) is a partial sectional view showing a single buffer member block and its vicinity , and (B) is an entire sectional view taken along line X-X' of (A). In the illustrated example, the ribs provided on the worm wheel have a taper angle (inclination angle) of 4°, and the compression portions provided on the output plate have a taper angle (inclination angle) of 6°. As shown in FIG. 6(B), the worm wheel, the output plate, and the buffer member are assembled together in such a manner that the three ribs of the worm wheel and the three buffer member compression portions of the output plate are alternately disposed, and each of the ribs and the buffer member compression portions is located between the corresponding blocks of the buffer member. Since each of the ribs and the buffer member compression portions is tapped such that its width becomes narrowest at the end located toward the division point, each of the blocks of the buffer member assumes a shape such that the block swells outward at a position near a radially central position thereof. The blocks are connected together by the connection portions at positions near the radially central position thereof.

The reducer section is assembled as follows. The worm wheel, the buffering member, and the output plate are disposed in the gear box. After the output shaft is inserted from the gear box side, the output plate is pressed toward the gear case side such that the output shaft is coupled with the output plate coupling potion. In this state, a stop ring (C-shaped retaining ring) is engaged with a stop ring engagement groove (see FIG. 2(B)) at the distal end of the output shaft, whereby the output plate is fixed to the output shaft. As described above, the ribs and the buffer member compression portions are taped in the axial direction. Therefore, the assembly of the worm wheel, the buffer member, and the output plate is facilitated. Further, the tapered shape facilitates the initial assembling operation (because clearances are present at the beginning of the assembly), and eliminates backlashes in the circumferential direction after completion of the assembly. Further, the buffer member can be set with a pre-load applied in the circumferential direction. Since backlashes in the circumferential direction are eliminated, it becomes possible to eliminate reverse noise which would otherwise been generated when the rotational direction is switched between the normal direction and the reverse direction. The magnitude of the pre-load can be adjusted by means of increasing and decreasing the taper angle.

Moreover, the ribs and the buffer member compression portions are tapered in the radial direction as well, and each of the blocks of the buffer member is formed such that the block swells outward at a position near the radially central position thereof. Therefore, the buffer member can be assembled without generation of backlashes in the circumferential direction.

## Claims

1. A motor equipped with a reducer comprising a motor section and a reducer section assembled to the motor section in which a projecting end of a rotating shaft extending from the motor section is rotatably supported by a bearing provided within a reducer section, and the reducer section has a gear box, a worm mounted on the extending rotating shaft accommodated in the gear box, a worm wheel meshed with the worm, an output plate fixed to the worm wheel via a buffer member, and an output shaft which is fixed to a central portion of the output plate and rotates together with the worm wheel, the motor **characterized in that**:
the worm wheel includes an outer ring having, on its outer circumference side, a tooth portion for engagement with the worm; an inner ring which surrounds the output shaft, a connecting bottom portion connecting the outer ring and the inner ring together, and a plurality of ribs, each of the ribs being tapered in an axial direction from the connecting bottom portion side toward the buffer member side such that the rib decreases in width toward its distal end;
the buffer member is composed of a plurality of arcuate blocks connected together to form an annular shape as a whole; and
the output plate has, in its center, an output shaft coupling portion to which the output shaft is fixed after being aligned therewith, and also has a plurality of buffer member compression portions integrally formed on a back face of a disk-like portion of the output plate on which the buffer member is located, each of the buffer member compression portions being tapered in an axial direction from the disk-like portion side toward the buffer member side such that the compression portion decreases in width toward its distal end.

2. A motor equipped with a reducer according to claim 1, wherein each of the taper angle of the ribs of the worm wheel and that of the buffer member compression portions of the output plate falls within a range of 4° to 15°.

3. A motor equipped with a reducer according to claim 1, wherein
each of the ribs of the worm wheel is divided at a division point near a radially central position so that each rib is composed of an inner rib and an outer rib, each of the inner rib connected to the outer circumference side of the inner ring and the outer rib connected to the inner circumference side of the outer ring being tapered toward the division point such that the width of the rib becomes narrowest at its end located toward the division point;
the plurality of blocks of the buffer member are connected together via connection portions located near a radially central position; and
each of the buffer member compression portions of the output plate is divided at a division point near a radially central position so that each buffer member compression portion is composed of an inner compression section and an outer compression section, each of the inner compression section and the outer compression section being tapered toward the division point such that the width of the compression section becomes narrowest at its end located toward the division point.

4. A motor equipped with a reducer according to claim 1, wherein projecting ridge portions are formed on opposite surfaces of the arcuate blocks which surfaces face the worm wheel and the output plate, respectively.

## Patentansprüche

1. Motor ausgestattet mit einem Untersetzungsgetriebe umfassend einen Motor-Abschnitt und einen Untersetzungsgetriebe-Abschnitt, der an dem Motor-Abschnitt montiert ist, in dem ein vorstehendes Ende einer rotierenden Welle, die sich von der Motor-Abschnitt erstreckt, drehbar gelagert von einem Lager gestützt ist, das in einem Untersetzungsgetriebes-Abschnitt vorgesehen ist, und wobei der Untersetzungsgetriebes-Abschnitt ein Getriebe aufweist, wobei eine Schnecke auf der sich erstreckenden drehbaren Welle montiert und in dem Getriebe untergebracht ist, wobei ein Schneckenrad mit der Schnecke im Eingriff ist, wobei eine Abtriebsplatte an dem Schneckenrad über ein Puffer-Element befestigt ist, und wobei eine Abtriebswelle vorgesehen ist, die an einem zentralen Abschnitt der Abtriebsplatte befestigt ist und zusammen mit dem Schneckenrad dreht, wobei der Motor **dadurch gekennzeichnet ist, dass**:
das Schneckenrad einen äußeren Ring aufweist, der auf seiner Außenumfangsseite einen Verzahnungs-Abschnitt für den Eingriff mit der Schnecke aufweist, einen inneren Ring aufweist, der die Abtriebswelle umschließt, eine verbindende Grundabschnittsseite aufweist, die den äußeren Ring und den inneren Ring miteinander verbindet, und eine Vielzahl von Rippen aufweist, wobei jede der Rippen in einer axialen Richtung von der verbindenden Grundabschnittsseite zu dem Puffer-Element hin kegelförmig ausgebildet ist, so dass die Rippe in der Breite zu ihrem Distalende hin abnimmt;
wobei das Puffer-Element aus einer Vielzahl von bogenförmigen Blöcken zusammengesetzt ist, die zusammen verbunden sind, um ein ringförmiges Gebilde als Ganzes zu bilden; und
wobei die Abtriebsplatte in ihrem Zentrum einen Abtriebswellen-Kupplungsabschnitt aufweist, an dem die Abtriebswelle befestigt ist nachdem sie darauf ausgerichtet ist, und auch eine Vielzahl von Puffer-Elementen-Kompressions-Abschnitte aufweist, die auf einer Rückseite eines scheibenförmigen Abschnitts der Abtriebsplatte ausgebildet ist, auf der das Puffer-Element angeordnet ist, wobei jedes der Puffer-Elementen-Kompressions-Abschnitte in axialer Richtung von der Seite des scheibenförmigen Abschnitts hin zu der Seite des Puffer-Elements kegelförmig ausgebildet ist, so dass der Kompressions-Abschnitt in der Breite zu seinem Distalende hin abnimmt.

2. Motor ausgestattet mit einer Untersetzungsgetriebe nach Anspruch 1, wobei jeder der Kegelwinkel der Rippen des Schneckenrades und der der Puffer-Elementen-Kompressions-Abschnitte der Abtriebsplatte in einen Bereich von 4° bis 15° fällt.

3. Motor ausgestattet mit einer Untersetzungsgetriebe nach Anspruch 1, wobei
jede der Rippen des Schneckenrades an einer Teilungsstelle nahe einer radialen zentralen Position aufgeteilt ist, so dass jede Rippe aus einer inneren Rippe und einer äußeren Rippe zusammengesetzt ist, wobei jede der inneren Rippen mit der Außenumfangs-Seite des inneren Rings verbunden ist und wobei die äußere Rippe mit der Innenumfangs-Seite des äußeren Ringes verbunden ist, der kegelförmig in Richtung des Teilungsstelle ausgebildet ist, so dass die Breite der Rippe am schmalsten an ihrem Ende ist, das in Richtung der Teilungsstelle angeordnet ist;
wobei die Mehrzahl von Blöcken des Puffer-Elements über VerbindungsAbschnitte miteinander verbunden sind, die in der Nähe einer radialen zentralen Position angeordnet sind; und
wobei jeder der Puffer-Elementen-Kompressions-Abschnitte der Abtriebsplatte an einer Teilungsstelle nahe einer radialen zentralen Position geteilt ist, so dass jeder Puffer-Elementen-Kompressions-Abschnitt aus einem inneren Kompressions-Abschnitt und einem äußeren Kompressions-Abschnitt zusammengesetzt ist, wobei jeder der inneren Kompressions-Abschnitte und der äußere Kompressions-Abschnitte in Richtung der Teilungsstelle kegelförmig ausgebildet ist, so dass die Breite des Kompressions-Abschnitts am schmalsten an seinem Ende ist, das in Richtung der Teilungsstelle angeordnet ist.

4. Motor ausgestattet mit einer Untersetzungsgetriebe nach Anspruch 1, wobei vorstehende Kanten-Abschnitte auf gegenüberliegenden Flächen der bogenförmigen Blöcke ausgebildet sind, wobei die Flächen sich jeweils gegenüber dem Schneckenrad und der Abtriebsplatte befinden.

## Revendications

1. Un moteur équipé d'un réducteur comportant une section motrice et une section réductrice assemblée à la section motrice dans laquelle une extrémité en projection d'un arbre de rotation débouchant de la section motrice est soutenue en rotation par un roulement disposé dans une section réductrice, et la section réductrice présente une boîte de vitesses, une vis sans fin montée sur l'arbre de rotation en projection disposée dans la boîte de vitesses, une roue dentée en prise avec la vis sans fin, une plaque de sortie fixée à la roue dentée par un élément d'amortissement, et un arbre de sortie qui est fixé à une partie centrale de la plaque de sortie et tournant avec la roue dentée , le moteur étant **caractérisé en ce que**:
la roue dentée comporte un anneau extérieur ayant, sur son côté circonférentiel extérieur, une partie dentée pour la prise avec la vis sans fin; un anneau intérieur qui entoure l'arbre de sortie, une partie inférieure de connexion connectant ensemble l'anneau extérieur et l'anneau intérieur, et une pluralité d'épaulements, chacun des épaulements étant conique suivant une direction axiale du côté de la partie inférieure de connexion vers le côté de l'élément d'amortissement de telle sorte que la largeur de l'épaulement diminue en direction de son extrémité distale;
l'élément d'amortissement se compose d'une pluralité de blocs arqués connectés ensemble de manière à former une forme annulaire globale; et
la plaque de sortie dipose, en son centre, d'une partie de couplage avec l'arbre de sortie à laquelle est fixée l'arbre de sortie est fixé après alignement, et dispose également une pluralité de parties de compression de l'élément d'amortissement intégralement formées sur une face arrière d'une partie en forme de disque de la plaque de sortie sur laquelle l'élément d'amortissement est disposé, chacune des parties de compression de l'élément d'amortissement étant conique suivant une direction axiale depuis le côté de partie en forme de disque vers le côté de l'élément d'amortissement de telle sorte que la largeur de la partie de compression diminue vers son extrémité distale.

2. Un moteur équipé d'un réducteur selon la revendication 1, dans lequel chacun des angles des épaulements coniques de la roue dentée et des parties de compression de l'élément d'amortissement de la plaque de sortie se situe dans une gamme de 4° à 15°.

3. Un moteur équipé d'un réducteur selon la revendication 1, dans lequel chacun des épaulements de la roue dentée est divisé à un point de séparation proche d'une position radiale centrale de telle sorte que chaque épaulement se compose d' un épaulement intérieur et d' un épaulement extérieur, chacun des épaulements intérieurs connecté du côté de la circonférence extérieure de l'anneau intérieur et l'épaulement extérieur connecté du côté de la circonférence intérieure de l'anneau extérieur étant conique en direction du point de division de telle sorte que la largeur de l'épaulement devient plus étroite à son extrémité disposée vers le point de division;
la pluralité de blocs de l'élément d'amortissement sont connectés ensemble au moyen de parties de connexion disposées près d'une position radiale centrale ; et
chacune des parties de compression de l'élément d'amortissement de la plaque de sortie est divisée à un point de division proche d'une position radiale centrale de telle manière que chaque partie de compression de l'élément d'amortissement se compose d'une section de compression intérieure et d' une section de compression extérieure, chaque section de compression intérieure et chaque section de compression extérieure étant coniques vers le point de division de telle sorte que la largeur de la section de compression devient plus étroite à son extrémité disposée vers le point de division.

4. Un moteur équipé d'un réducteur selon la revendication 1, dans lequel des portions striées en saillie sont formées sur des surfaces opposées des blocs arqués lesquelles surfaces font face à la roue dentée et la plaque de sortie, respectivement.
